# EUROPÄISCHE PATENTANMELDUNG

(11) **EP 2 637 080 A1**
(43) Veröffentlichungstag der Anmeldung: **11.09.2013**
(21) Anmeldenummer: 13157435.2
(22) Anmeldetag: 01.03.2013
(51) Int. Cl.: G06F 3/01, F24C 7/08, G06F 3/03

(54) **Abgesetzte Bedieneinheit für ein Haushaltsgerät**

(30) Priorität: 05.03.2012 DE 102012203458
(71) Anmelder: E.G.O. Elektro-Gerätebau GmbH, 75032 Oberderdingen (DE)
(72) Erfinder: Ose, Lutz, 75447 Sternenfels (DE); Jungbauer, Markus, 76646 Bruchsal-Obergrombach (DE)
(74) Vertreter: Patentanwälte Ruff, Wilhelm, Beier, Dauster & Partner

(57) **Zusammenfassung**

Eine abgesetzte Bedieneinheit (100) für ein Haushaltsgerät (200) weist auf: eine Kamera (101), eine Auswerteeinheit (102), die von der Kamera (101) erzeugte Bilddaten zur Erkennung einer Bediengeste aus einer vorgegebenen Menge von Bediengesten auswertet, wobei die Bediengesten zur Bedienersteuerung des Haushaltsgerätes (200) dienen, wobei das Haushaltsgerät (200) eine von der Bedieneinheit räumlich getrennte Steuereinrichtung (201) zur Funktionssteuerung aufweist, eine Schnittstelle (103) zur drahtlosen Datenübertragung zwischen der Bedieneinheit (100) und der Steuereinrichtung (201), wobei Informationen betreffend die erkannte Bediengeste drahtlos über die Schnittstelle (103) zur Steuereinrichtung (201) übertragen werden, und ein Gehäuse (106), in das die Kamera (101), die Auswerteeinheit (102) und die Schnittstelle (103) integriert sind.

## Beschreibung

Die Erfindung betrifft eine abgesetzte Bedieneinheit für ein Haushaltsgerät.

Abgesetzte Bedieneinheiten ermöglichen eine komfortable Bedienung von Haushaltsgeräten, wobei mittels einer einzigen Bedieneinheit mehrere Haushaltsgeräte bedienbar sein können.

In der Regel weisen abgesetzte Bedieneinheiten Tasten, Knöpfe, Drehsteller, usw. auf, die eine Eingabe von Bedienbefehlen ermöglichen.

### Aufgabe und Lösung

Der Erfindung liegt die Aufgabe zugrunde, eine abgesetzte Bedieneinheit für ein Haushaltsgerät zur Verfügung zu stellen, die eine möglichst komfortable Bedienung des Haushaltsgeräts ermöglicht.

Die Erfindung löst diese Aufgabe durch eine Bedieneinheit nach Anspruch 1.

Bevorzugte Ausführungsformen sind Gegenstand der Unteransprüche, deren Wortlaut hiermit durch Bezugnahme zum Inhalt der Beschreibung gemacht wird.

Die abgesetzte Bedieneinheit für ein Haushaltsgerät weist auf: eine Kamera, beispielsweise mit einem Kamerachip und einer zugehörigen Optik, eine Auswerteeinheit, beispielsweise in Form eines Mikroprozessors, die von der Kamera erzeugte Bilddaten zur Erkennung einer Bediengeste aus einer vorgegebenen Menge von Bediengesten auswertet, wobei die Bediengesten zur Bedienersteuerung des Haushaltsgerätes dienen, wobei das Haushaltsgerät eine von der Bedieneinheit räumlich getrennte Steuereinrichtung bzw. Steuereinheit zur Funktionssteuerung aufweist, eine bidirektionale oder unidirektionale Schnittstelle zur drahtlosen Datenübertragung zwischen der Bedieneinheit und der Steuereinrichtung, wobei Informationen betreffend die erkannte Bediengeste drahtlos über die Schnittstelle zur Steuereinrichtung übertragen werden, und ein Gehäuse, in das die Kamera, die Auswerteeinheit und die Schnittstelle integriert sind.

Unter einer abgesetzten Bedieneinheit wird insbesondere eine tragbare Bedieneinheit entsprechend einer Fernbedienung verstanden, die im Bedien-Betrieb nicht galvanisch mit dem zu bedienenden Haushaltsgerät bzw. dessen Steuereinrichtung gekoppelt ist. Die abgesetzte Bedieneinheit kann beispielsweise an einer dafür vorgesehenen Funktionsposition an einem Gehäuse des Haushaltsgeräts angeordnet werden.

Die Bedieneinheit beinhaltet bevorzugt sämtliche Komponenten und Funktionen für eine Gestenbedienung und bildet somit eine Gestensteuerungs-Benutzerschnittstelle, die mit der Steuereinrichtung des Haushaltsgeräts drahtlos koppelbar ist. Über die drahtlose Schnittstelle zwischen Bedieneinheit und Steuereinrichtung des Haushaltsgeräts werden bevorzugt lediglich grundlegende Informationen in Form von generischen Bediendaten übertragen. Dies ermöglicht es, dass die Steuereinrichtung keinerlei Berechnungen odgl. zur Erkennung der Bediengeste durchführen muss. In der Bedieneinheit kann eine Anzahl von vordefinierten Bediengesten abgespeichert sein. Wird eine Bediengeste erkannt, werden über die drahtlose Schnittstelle beispielsweise nur die Kennung der Bediengeste und die X-, Y- und Z-Position eines Fingers und/oder einer Hand eines Bedieners, der die Bediengeste ausführt, übertragen. Bei manchen Bediengesten besteht die Möglichkeit, dass diesen keine derartigen Positionsdaten sinnvoll zugeordnet werden können.

Mittels einer der Bediengesten kann beispielsweise eine Kochstelle eines Kochfelds mit mehreren Kochstellen ausgewählt werden und anschließend mittels einer weiteren der Bediengesten eine gewünschte Heizleistung des Kochfelds eingestellt werden. Weiter können spezifische Funktionen des Haushaltsgeräts ausgewählt bzw. aktiviert werden, beispielsweise in Form einer Programmeinstellung, einer Programmparametereinstellung, usw.

Die Bedieneinheit kann eine Energieversorgungseinheit zur Erzeugung von Betriebsenergie für die Bedieneinheit aus einem extern erzeugten magnetischen Wechselfeld umfassen, wodurch eine induktive Stromversorgung ermöglicht wird. Die Bedieneinheit kann batteriefrei betrieben werden.

Die Bedieneinheit kann ein steuerbares Leuchtmittel aufweisen, wobei die Auswerteeinheit das Leuchtmittel und die Kamera miteinander synchronisiert. Das steuerbare, wobei steuerbar im einfachsten Fall ein- und ausschaltbar bedeutet, Leuchtmittel kann beispielsweise ein Infrarot-Leuchtmittel sein. Die Auswerteeinheit kann die Ansteuerung dieses Leuchtmittels vornehmen, beispielsweise synchron zu einem so genannten Shutter der Kamera. Dies kann vorteilhaft sein, da das Leuchtmittel nur in dem Moment einen Lichtpuls erzeugt, während dem die Kamera ein Bild aufnimmt.

Alternativ kann das Leuchtmittel getrennt von der Bedieneinheit vorgesehen sein, beispielsweise unterhalb eines Glaskeramikkochfelds, wobei die Auswerteeinheit ein bezogen auf die Bedieneinheit extern vorgesehenes steuerbares Leuchtmittel und die Kamera miteinander synchronisiert, beispielsweise durch drahtlose Übertragung eines Synchronisationssignals.

Das Gehäuse kann eine Halteeinrichtung aufweisen, mittels der die Bedieneinheit beispielsweise an einem Gehäuse des Haushaltsgeräts, einem Kochfeld und/oder einer Dunstabzugshaube fixierbar ist.

Die Kamera kann eine 2-D-Kamera oder eine 3-D-Kamera sein, beispielsweise eine so genannte Time-of-Flight-Kamera oder eine Stereo-Kamera.

Die drahtlose Schnittstelle kann beispielsweise eine Infrarot-Schnittstelle, eine WLAN-Schnittstelle oder eine Bluetooth-Schnittstelle sein.

### Kurzbeschreibung der Zeichnung

Die Erfindung wird nachfolgend unter Bezugnahme auf die Zeichnung beschrieben, die Ausführungsformen der Erfindung zeigt. Hierbei zeigt schematisch:

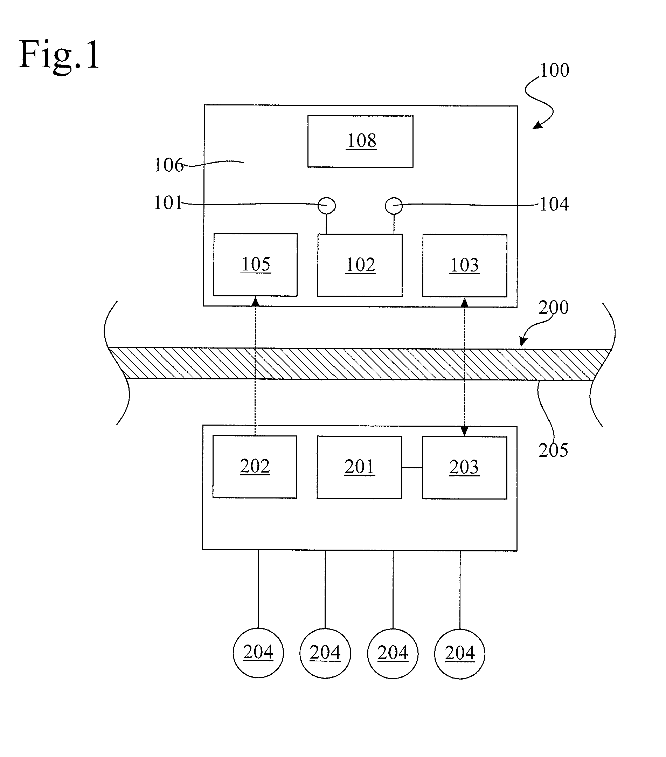

Fig. 1 eine erfindungsgemäße, abgesetzte Bedieneinheit für ein Haushaltsgerät.

### Detaillierte Beschreibung der Ausführungsbeispiele

Fig. 1 zeigt eine erfindungsgemäße, abgesetzte Bedieneinheit 100 zur abgesetzten Bedienung bzw. Fernbedienung eines Haushaltsgeräts 200.

Das in Fig. 1 gezeigte Haushaltsgerät 200 in Form eines Elektroherdes weist eine Steuereinrichtung 201, beispielsweise in Form eines Mikrocontrollers, auf, die zur Funktionssteuerung des Haushaltsgeräts 200 dient, indem beispielsweise Aktoren, hier Heizmittel 204, geeignet angesteuert werden, Sensoren ausgelesen werden, Regelschleifen realisiert werden, vom Benutzer auswählbare Programmabläufe abgearbeitet werden, usw. Es versteht sich, dass die Bedieneinheit 100 auch zur Bedienersteuerung beispielsweise einer Waschmaschine, eines Wäschetrockners, etc. verwendet werden kann. Die Bedieneinheit kann auch zur Bedienung mehrerer Haushaltsgeräte dienen.

Das Bedieneinheit 100 umfasst eine herkömmliche 2-D- oder 3-D- Kamera 101, eine Auswerteeinheit 102, beispielsweise in Form eines Mikrocontrollers oder eines FPGA, die von der Kamera 101 erzeugte Bilddaten zur Erkennung einer Bediengeste aus einer vorgegebenen Menge von Bediengesten auswertet, ein von der Auswerteeinheit 102 angesteuertes Infrarot(IR)-Leuchtmittel 104, eine drahtlose, bidirektionale IR-Schnittstelle 103 zum Koppeln der Bedieneinheit 100 mit der Steuereinrichtung 201 über eine korrespondierende, bidirektionale IR-Schnittstelle 203, ein Display 108 zum Anzeigen von Betriebsparametern, eine Energieversorgungseinheit 105 und ein Gehäuse 106, in welches die vorgenannten Komponenten integriert sind.

Die Energieversorgungseinheit 105 dient zur Erzeugung von Betriebsenergie für die Bedieneinheit 100 aus einem magnetischen Wechselfeld, welches durch eine Speisequelle 202 des Haushaltsgeräts 200 erzeugt wird.

Die vorgegebene Menge von Bediengesten dient zur Bedienersteuerung des Haushaltsgerätes 200, wobei die Menge folgende Gesten umfassen kann: Zeigen mit dem Zeigefinger, geschlossene Hand, gespreizte Finger, Faust, Faust mit Daumen rechts oder links, usw. Einer jeweiligen Bediengeste aus der vorgegebenen Menge von Bediengesten ist eine eindeutige Bediengesten-Kennung zugeordnet.

Die Bedieneinheit 100 erkennt zusätzlich zu der eigentlichen Bediengeste zugehörige Positionsinformationen und/oder Richtungsinformationen, beispielsweise gegebenenfalls X- und Y-Koordinaten, auf die ein Finger einer Hand eines Bedieners zeigt, X- und Y-Koordinaten der Hand und eine Z-Koordinate der Hand. Zur Bestimmung der Z-Koordinate kann eine 3-D-Kamera verwendet werden. Alternativ kann eine (pseudo) Z-Koordinate mittels einer 2-D-Kamera ermittelt werden, indem eine Größenänderung der Hand ausgewertet wird. Wenn die Hand das erste Mal von der Kamera erkannt wird, kann eine Default-Z-Koordinate vergeben werden, die dann in Abhängigkeit von einer in der Kamera 101 detektierten Größenänderung der Hand verändert wird.

Sobald eine Bediengeste mittels der Bedieneinheit 100 erkannt worden ist, werden die zugehörige Bediengesten-Kennung sowie gegebenenfalls zugehörige Positionsinformationen über die Schnittstelle 103 drahtlos zur Steuereinrichtung 201 übertragen. Die Steuereinrichtung 201 setzt die Bediengeste in Verbindung mit den gegebenenfalls vorhandenen Positionsinformationen entsprechend um, indem beispielsweise eine der Geste zugehörige Funktion des Haushaltsgeräts 200 gestartet wird, eine Kochstelle ausgewählt wird, ein Sollwert verändert wird, etc.

Die Bedieneinheit 100 kann beispielsweise auf einer vorgegebenen Position auf einer Glaskeramikplatte 205 des Haushaltsgeräts angeordnet werden, wobei beispielsweise nicht gezeigte, korrespondierende magnetische Fixiermittel in der Bedieneinheit 100 und unterhalb der Glaskeramikplatte 205 vorgesehen sein können, die eine lösbare Fixierung und ein Ausrichten der Bedieneinheit auf der Glaskeramikplatte 205 bewirken.

Das IR-Leuchtmittel 104 kann alternativ auch unterhalb der für IR-Licht durchlässigen Glaskeramikplatte 205 vorgesehen sein, wobei das IR-Leuchtmittel 104 für diesen Fall durch Austausch von drahtlos übertragenen Synchronisationssignalen mit der Kamera 101 synchronisiert werden kann.

Aufgrund der modularen Gestaltung der Bedieneinheit kann eine abgesetzte Bedienung mit Gestenerkennung an unterschiedlichste Steuerungen mit geringem Aufwand angebunden werden. Da die Bedieneinheit bereits die vollständige Auswertung der von der Kamera gelieferten Bilddaten durchführt, kann die nachfolgende Steuerung mit einem günstigeren, leistungsschwächeren Prozessor realisiert werden, oder vorhandene Steuerungen können ohne Änderung um eine Gesten-Steuerung ergänzt werden.

## Patentansprüche

1. Abgesetzte Bedieneinheit (100) für ein Haushaltsgerät (200), aufweisend:
- eine Kamera (101),
- eine Auswerteeinheit (102), die von der Kamera (101) erzeugte Bilddaten zur Erkennung einer Bediengeste aus einer vorgegebenen Menge von Bediengesten auswertet, wobei die Bediengesten zur Bedienersteuerung des Haushaltsgerätes (200) dienen, wobei das Haushaltsgerät (200) eine von der Bedieneinheit räumlich getrennte Steuereinrichtung (201) zur Funktionssteuerung aufweist,
- eine Schnittstelle (103) zur drahtlosen Datenübertragung zwischen der Bedieneinheit (100) und der Steuereinrichtung (201), wobei Informationen betreffend die erkannte Bediengeste drahtlos über die Schnittstelle (103) zur Steuereinrichtung (201) übertragen werden, und
- ein Gehäuse (106), in das die Kamera (101), die Auswerteeinheit (102) und die Schnittstelle (103) integriert sind.

2. Bedieneinheit nach Anspruch 1, **gekennzeichnet durch**
- eine Energieversorgungseinheit (105) zur Erzeugung von Betriebsenergie für die Bedieneinheit aus einem extern erzeugten magnetischen Wechselfeld.

3. Bedieneinheit nach Anspruch 1 oder 2, **dadurch gekennzeichnet, dass**
- das die Bedieneinheit ein steuerbares Leuchtmittel (104) aufweist, wobei die Auswerteeinheit das Leuchtmittel und die Kamera miteinander synchronisiert.

4. Bedieneinheit nach Anspruch 1 oder 2, **dadurch gekennzeichnet, dass**
- die Auswerteeinheit ein bezogen auf die Bedieneinheit extern vorgesehenes steuerbares Leuchtmittel und die Kamera miteinander synchronisiert.

5. Bedieneinheit nach einem der vorhergehenden Ansprüche, **dadurch gekennzeichnet, dass**
- das Gehäuse eine Halteeinrichtung aufweist, mittels der die Bedieneinheit an einem Gehäuse des Haushaltsgeräts, einem Kochfeld und/oder einer Dunstabzugshaube fixierbar ist.

6. Bedieneinheit nach einem der vorhergehenden Ansprüche, **dadurch gekennzeichnet, dass**
- die Kamera eine 2-D-Kamera oder eine 3-D-Kamera ist.

7. Bedieneinheit nach einem der vorhergehenden Ansprüche, **dadurch gekennzeichnet, dass**
- die Schnittstelle eine Infrarot-Schnittstelle, eine WLAN-Schnittstelle oder eine Bluetooth-Schnittstelle ist.
